# EUROPEAN PATENT SPECIFICATION

(11) **EP 2 109 564 B1**
(45) Date of publication and mention of the grant of the patent: **23.03.2011**
(21) Application number: 08701773.7
(22) Date of filing: 11.01.2008
(51) Int. Cl.: B62K 3/00

(54) **IMPROVED SCOOTER**
VERBESSERTER ROLLER
TROTTINETTE AMÉLIORÉE

(30) Priority: 24.01.2007 GB 0701336
(43) Date of publication of application: 21.10.2009
(60) Divisional application: 10005852.8
(73) Proprietor: H Grossman Limited, Rutherglen Glasgow G73 1UB (GB)
(72) Inventor: GROSSMAN, Martin, Glasgow G73 1UB (GB)
(74) Representative: Moreland, David
(86) International application number: PCT/GB2008/000090
(87) International publication number: WO 2008/090309

(56) References cited:
- WO-A-98/46474
- WO-A-2004/083028
- GB-A- 2 410 931
- US-A1- 2002 030 339
- US-A1- 2002 105 158
- US-A1- 2003 007 352

## Description

### FIELD OF INVENTION

The present invention relates to an improved scooter or similar type self or foot propelled vehicle or transport means. The invention particularly, though not exclusively, relates to a scooter or other self or foot propelled vehicle incorporating a novelty illumination or lighting effect.

### BACKGROUND OF INVENTION

Scooters have undergone an upsurge in popularity in recent years because of innovations such as folding scooters and so-called micro-scooters.

It is an object of at least one embodiment of at least one aspect of the present invention to provide an improved scooter or the like.

US Patent Application Publication No. US 2002/0030339 discloses a wheeled vehicle including a platform mounted between a front wheel assembly and a rear wheel assembly. The rear wheel comprises a pedal, a shoe mounted to the pedal and a spring arranged to bias the shoe away from a rear wheel. The vehicle may include a light mounted in a rear fender and which turns on and off depending on the pressure applied to the pedal.

It is an object of at least one embodiment of at least one aspect of the present invention to obviate and/or mitigate one or more disadvantages in the prior art.

It is an object of at least one embodiment of at least one aspect of the present invention to provide a scooter or the like having a novel or novelty light effect. By such provision, the scooter or the like may be more desirable to a user. Such provision may assist in making the user and his/her intentions (e.g. braking) more visible to others. This may contribute to improved safety for the user and others.

### SUMMERY OF INVENTION

According to a first aspect of the present invention there is provided a self-propelled or foot-propelled vehicle according to claim 1.

The vehicle preferably comprises a single front wheel and a single rear wheel.

Alternatively the vehicle may comprise a single front wheel and a pair of rear wheels which are coaxially disposed relative to one another.

The foot plate or platform, preferably, at least in use, may not extend rearward of the rear wheel, and preferably may not extend forward of the front wheel.

Preferably the scooter has a brake member, preferably a rear brake member.

The brake member may be biased by biasing means to a non-braking position.

Preferably the brake member comprises a wheel arch or guard.

Preferably in a non-braking position or state there is a gap between the member and a rear wheel of the vehicle or scooter, while in a braking position or state the brake member frictionally contacts the rear wheel.

The brake member may, in use, be depressed into a braking position by a user applying their foot to the brake member. Removal of the user's foot from the brake member may cause the brake member to return to the non-braking position.

Movement of the brake member to the braking position and/or maintenance of the brake member at the braking position may cause the at least one light to switch on or illuminate.

Movement of the brake member from the braking position and/or maintenance of the brake member at the non-braking position may cause the at least one light to switch off or not illuminate.

The at least one light may comprise at least one electrically powered means such as a light emitting diodes (LED(s)). The light (s) may be of any colour - preferably red.

The at least one light may be mounted to be rear facing on the vehicle. For example (particularly where the vehicle is a scooter, e.g. microscooter), the at least one light may be provided on a rear portion of a/the platform of the vehicle/scooter.

The rear portion may comprise a rear facing surface(s) of the vehicle, e.g. of the platform.

The rear portion may be provided forward of the at least one rear-wheel.

The rear portion may be provided between the rear wheel and the front wheel.

The rear portion may be provided adjacent the rear wheel, e.g. adjacent side(s) of the rear wheel.

The rear portion may be provided below a level of a top surface or foot plate of the platform.

The rear portion may comprise at least part of a rear side of the platform. This arrangement provides particular advantage in simplicity of construction and robustness, in use.

The at least one light may comprise at least one illumination means on a left hand side rear portion of the vehicle/scooter/platform and at least one illumination means on a right hand side rear portion of the vehicle/scooter/platform. The left and right hand side rear portions may be provided on or adjacent to either side of the rear wheel.

The vehicle may comprise electronic means activated by movement of the brake member.

The electronic means may comprise a switch means having a switch member biased into contact with the brake member.

Preferably by this arrangement when the brake member is in the non-braking position, the switch member is in a first or retracted position, and the switch means is in an "off" state, while when the brake member is in the braking position the switch member is in a second or extended position, and the switch means is in an "on" state.

The electronic means may comprise circuit means, including, for example, one or more batteries, and the at least one brake light.

The batteries may be provided in a compartment below the platform of the scooter, e.g. within an elongate slot therein.

The electronic means/compartment may include an on/off switch for the electronic means.

The at least one brake light may be provided forward of a rearmost portion of the rear wheel(s).

Most preferably the at least one brake light may be provided forward of a foremost portion of the rear wheel (s). The platform may be made from a metallic material, e.g. aluminium, which may be extruded.

According to a second aspect of the present invention there is provided a platform adapted for use in a self-propelled or foot-propelled vehicle according to the first aspect of the present invention.

### BRIEF DESCRIPTION OF DRAWINGS

An embodiment of the invention will now be described by way of example only, and with reference to the accompanying drawings, which are:
- **Figure 1**: a side view of a scooter according to an embodiment of the present invention in a first (collapsed) state;
- **Figure 2**: a side view of the scooter of Figure 1 in a second (erected) state;
- **Figure 3**: a side view of the scooter of Figure 1 in an erected state with a rear brake thereof deployed and a rear brake thereof deployed and a rear brake light thereof illuminated;
- **Figure 4**: a close up side view of the rear of the scooter of Figure 1 with a rear brake deployed and rear brake light thereof illuminated;
- **Figure 5**: a partial rear view of the scooter of Figure 1;
- **Figure 6**: a view from below of the scooter of Figure 1;
- **Figure 7**: a close up view from the other side of the scooter of Figure 1 with the rear brake deployed and rear brake light illuminated; and

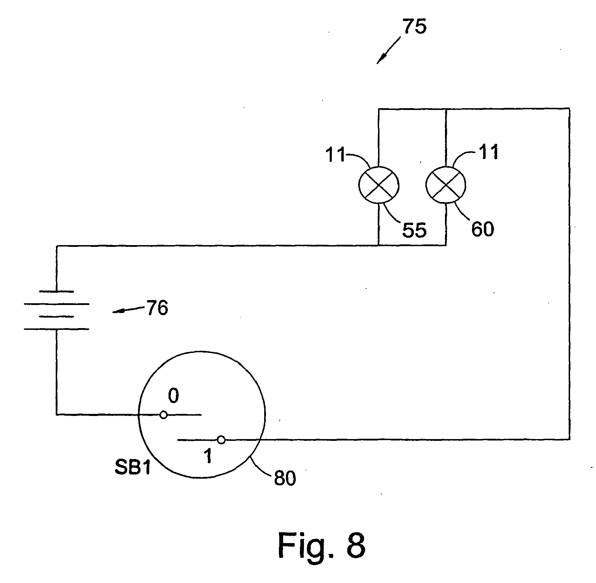

- **Figure 8**: a circuit diagram of circuitry of the scooter of Figure 1.

### DETAILED DESCRIPTION OF DRAWINGS

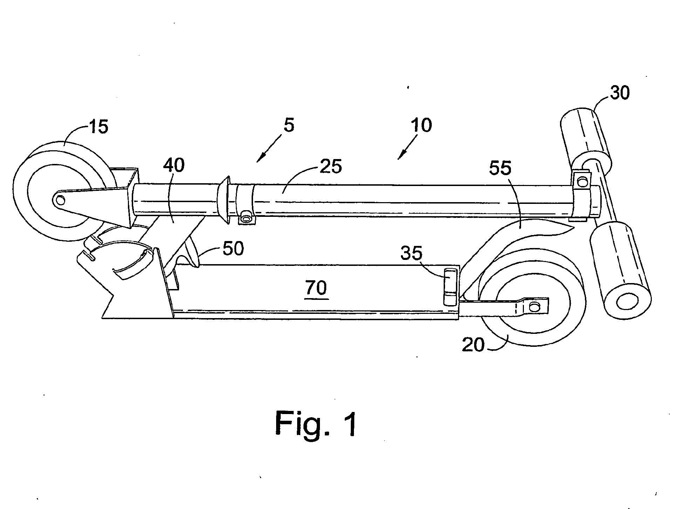

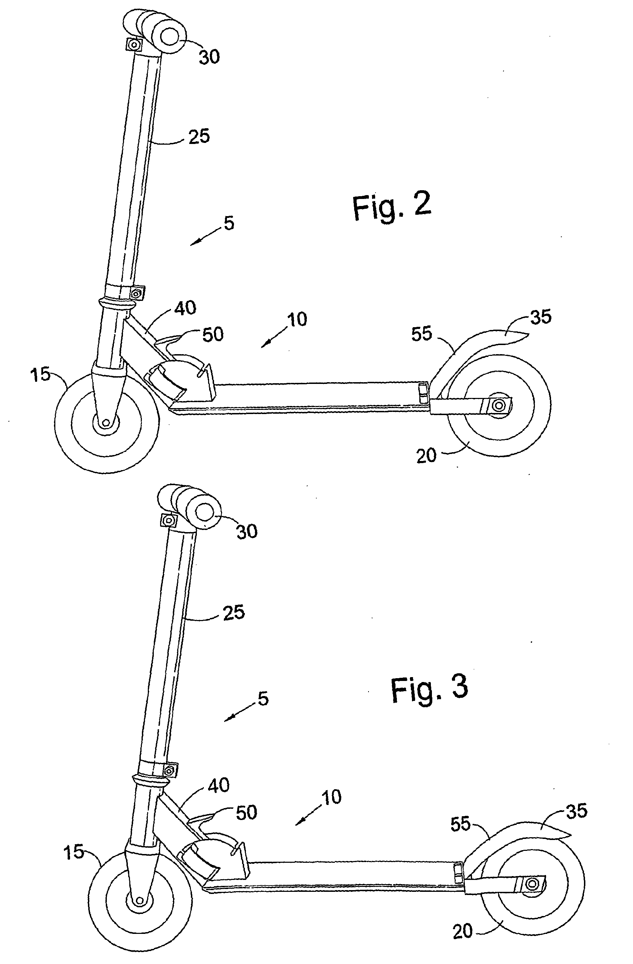

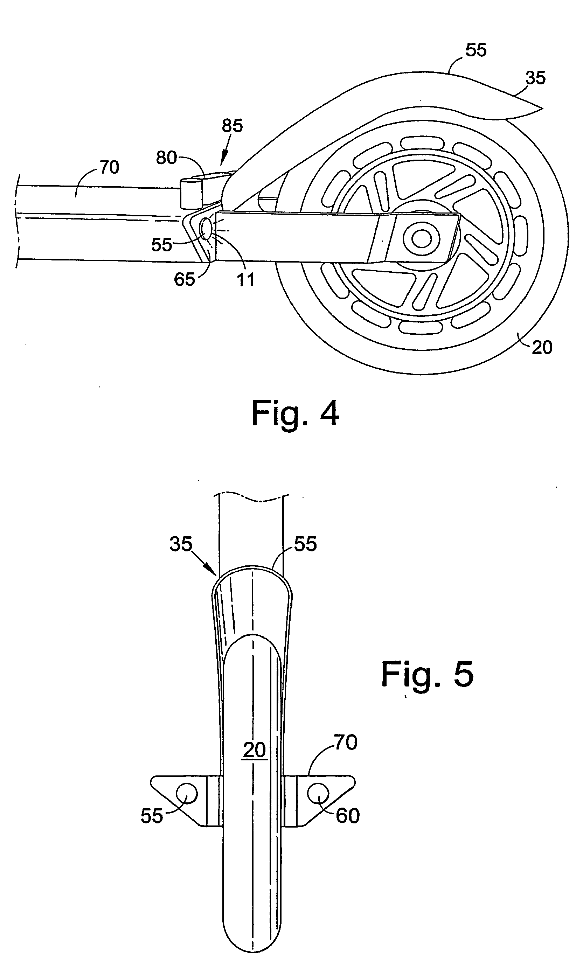

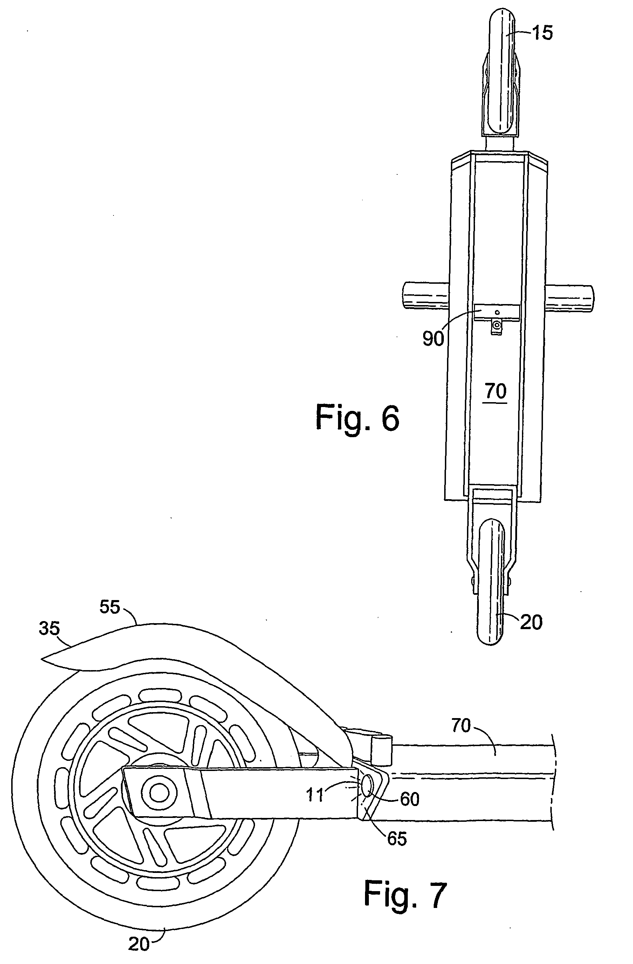

Referring to Figures 1 to 7 there is shown a self-propelled or foot-propelled vehicle, generally designated 5, according to an embodiment of the present invention. The vehicle 5 comprises at least one brake light or illumination means 11 as will be described hereinafter in greater detail.

In this embodiment the vehicle 5 is a scooter 10, particularly a collapsible scooter or so-called "microscooter". The scooter 10 has first and second (front and rear) wheels 15,20, steering column 25, handlebars 30, and a brake member 35, as well as hingeable locking mechanism 40 including lever 50.

It will be appreciated that the disclosed embodiment comprises a two wheeled scooter. However, in a modification there can be provided a front wheel 15 and a pair of rear wheels 20 coaxially disposed relative to one another. The vehicle 5 also comprises a foot plate or platform 70, at least in use, provided between the front wheel 15 rear wheels 20.

The scooter 10 has brake member 35, comprising a rear brake member 55. The brake member 35 is biased by biasing means (not shown), such as a spring, to a non-braking position. The brake member 35 comprises a wheel arch or guard.

In a non-braking position or state there is a gap between the member 35 and a rear wheel 20 of the scooter 10, while in a braking position or state the brake member 35 frictionally contacts the rear wheel 20.

The brake member 35, in use, is depressed into a braking position by a user normally by applying their foot to the brake member 35. Removal of the user's foot from the brake member 35 causes the brake member 35 to return to the non-braking position.

Movement of the rear brake 55 to the braking position and/or maintenance of the rear brake 55 at the braking position causes the at least one brake light 11 to illuminate.

Movement of the brake member 35 from the braking position and/or maintenance of the brake member 35 at the non-braking position causes the at least one brake light 11 to not illuminate.

The at least one brake light comprises at least one light emitting diode (LED), and in this embodiment a pair of LEDs 55,60. The at least one brake light 11 is mounted to be rear facing on the vehicle 5. In this embodiment the at least one brake light 11 is provided on a rear facing portion 65 of the platform 70 of the scooter 10.

The rear facing portion 65 comprises a rear facing surface(s) of the vehicle 5, e.g. of the platform 70. The rear facing portion 65 is provided forward of the at least one rear wheel 20. The rear facing portion 65 is provided between the rear wheel 20 and the front wheel 15.

The rear facing portion 65 is provided adjacent the rear wheel, e.g. adjacent side(s) of the rear wheel 20.

As can be seen from various of the Figures, the rear facing portion 65 is provided below, i.e. extending downwardly from a top surface or foot plate of the platform 70. The rear facing portion 65 comprises at least part of a rear side of the platform 70.

The at least one brake light 11 comprises at least one illumination means on a left hand side rear portion of the platform 70 and at least one illumination means on a right hand side rear portion of the platform 70. The left and right hand side rear portions are provided on or adjacent to either side of the rear wheel 20 and rearward of an axle thereof.

The vehicle 5 comprises electronic means 75 activated by movement of the brake member 35. The electronic means 75 comprise a switch means 80 having a switch member 85 biased into contact with the brake member 35.

By this arrangement when the brake member 35 is in the non-braking position, the switch member 85 is in a first or retracted position, and the switch means 80 is in an "off" state, while when the brake member 35 is in the braking position the switch member 85 is in a second or extended position, and the switch means 80 is in an "on" state.

The electronic means 75 comprises circuit means, including, for example, one or more batteries 76, and the at least one brake light 11. The batteries are provided in a compartment 90 below the platform 20 of the scooter 10, e.g. within an elongate slot therein. The compartment 90 includes an on/off switch (not shown) for the electronic means.

The platform 70 is typically made from a metallic material, e.g. aluminium, which is advantageously lightweight and extrudable.

It will be appreciated that the embodiment of the invention hereinbefore described is given by way of example only and is not meant to limit the scope thereof in any way. It will be appreciated that various modifications may be envisaged to the disclosed embodiment without departing from the scope of the invention.

For example, it may be envisaged that the platform 70 may extend on one or both sides of the rear wheel 20 such that the rear facing portion(s) 65 is/are provided rearward of a foremost portion of the rear wheel and forward (or alternatively rearward) of a rearmost portion of the rear wheel.

Further, when the brake member is applied, the brake light(s) may be caused to illuminate constantly/statically or intermittently/flash.

Further illumination may be provided on the vehicle, e.g. on the wheels thereof. The wheels may be at least part transparent or translucent. The wheels may be semi white in finish.

## Claims

1. A self-propelled or foot-propelled vehicle (5) wherein the vehicle is a scooter (10), such as a collapsible scooter or microscooter, wherein the vehicle comprises at least one brake light or illumination means (11), at least one front wheel (15) and at least one rear wheel (20) and a footplate or platform (70), provided between the at least one front wheel and the at least one rear wheel,
**characterised in that** the at least one brake light is provided on a rear facing portion (65) of the platform of the vehicle, the rear facing portion comprising a rear facing surface of the platform.

2. A self-propelled vehicle as claimed in claim 1, wherein the scooter has a brake member (35), such as a rear brake member (55), and optionally
wherein the brake member is biased by biasing means to a non-braking position, and/or
wherein the brake member comprises a wheel arch or guard, and optionally further in said option
wherein in a non-braking position or state there is a gap between the member and the at least one rear wheel of the vehicle/scooter, while in a braking position or state the brake member frictionally contacts the at least one rear wheel, and optionally yet further in any case
wherein the brake member can, in use, be depressed into a braking position by a user applying their foot to the brake member, and removal of the user's foot from the brake member causes the brake member to return to the non-braking position, and optionally yet even further in any case
wherein, in use, movement of the rear brake to the braking position and/or maintenance of the rear brake at the braking position causes the at least one brake light to illuminate, and optionally still yet further in any case
wherein, in use, movement of the rear brake from the braking position and/or maintenance of the rear brake at the non-braking position causes the at least one brake light to not illuminate.

3. A vehicle as claimed in any preceding claim, wherein the at least one brake light comprises at least one LED (55,60), and/or
wherein the brake light(s) are red in colour, and/or wherein the at least one brake light is mounted to be rear facing on the vehicle.

4. A vehicle as claimed in any preceding claim, wherein the rear facing portion is provided forward of the at least one rear wheel, and/or the rear facing portion is provided between the at least one rear wheel and the at least one front wheel, and/or the rear facing portion is provided adjacent the at least one rear wheel, and optionally
wherein the rear facing portion is provided below a level of a top surface or foot plate of the platform, and/or the rear facing portion comprises at least part of a rear side of the platform.

5. A vehicle as claimed in any preceding claim, wherein the at least one brake light comprises at least one illumination means on a left hand side rear portion of the vehicle/scooter/platform and at least one illumination means on a right hand side rear portion of the vehicle/scooter/platform.

6. A vehicle as claimed in claim 5, wherein the left and right hand side rear portions are provided on or adjacent to either side of a/the rear wheel.

7. A vehicle as claimed in claim 2 or any of claims 3 to 6 when dependent upon claim 2, wherein the vehicle comprises electronic means (75) activated by movement of the brake member.

8. A vehicle as claimed in claim 7, wherein the electronic means comprises a switch means (80) having a switch member (85) biased into contact with the brake member, and optionally
wherein, in use, when the brake member is in the non-braking position, the switch member is in a first or retracted position, and the switch means is in an "off" state, while when the brake member, is in the braking position the switch member is in a second or extended position, and the switch means is in an "on" state.

9. A vehicle as claimed in either of claims 7 or 8, wherein the electronic means comprise circuit means, optionally including one or more batteries and the at least one brake light, and optionally
wherein the batteries is/are provided in a compartment (90) below the platform of the scooter, such as within an elongate slot therein.

10. A vehicle as claimed in any of claims 7 to 9, wherein the electronic means/compartment include an on/off switch for the electronic means.

11. A vehicle as claimed in any preceding claim, wherein the at least one brake light is provided forward of a rearmost portion of the rear wheel(s), and/or the at least one brake light is provided forward of a foremost portion of the rear wheel(s).

12. A vehicle as claimed in any preceding claim, wherein the vehicle comprises one front wheel and one rear wheel.

## Patentansprüche

1. Fahrzeug (5) mit Selbstantrieb oder Fußantrieb, wobei das Fahrzeug ein Roller (10), wie beispielsweise ein zusammenklappbarer Roller oder Mikroroller, ist, wobei das Fahrzeug wenigstens ein Bremslicht oder Beleuchtungsmittel (11), wenigstens ein Vorderrad (15) und wenigstens ein Hinterrad (20) und eine Fußplatte oder Plattform (70), die zwischen dem wenigstens einen Vorderrad und dem wenigstens einen Hinterrad bereitgestellt wird, umfasst,
**dadurch gekennzeichnet, dass** das wenigstens eine Bremslicht an einem nach hinten zeigenden Abschnitt (65) der Plattform des Fahrzeugs bereitgestellt wird, wobei der nach hinten zeigende Abschnitt eine nach hinten zeigende Fläche der Plattform umfasst.

2. Fahrzeug mit Selbstantrieb nach Anspruch 1, wobei der Roller ein Bremselement (35), wie beispielsweise ein hinteres Bremselement (55), hat und wahlweise
wobei das Bremselement durch Vorspannmittel zu einer nicht bremsenden Stellung vorgespannt wird und/oder
wobei das Bremselement einen Radlauf oder -schutz umfasst und wahlweise ferner bei dieser Option
wobei es in einer nicht bremsenden Stellung oder Lage einen Spalt zwischen dem Element und dem wenigstens einen Hinterrad des Fahrzeugs/Rollers gibt, während in einer bremsenden Stellung oder Lage das Bremselement das wenigstens eine Hinterrad reibend berührt, und wahlweise noch ferner in jedem Fall
wobei das Bremselement bei Anwendung durch einen Benutzer, der seinen Fuß auf das Bremselement aufbringt, in eine bremsende Stellung niedergedrückt werden kann und ein Wegnehmen des Fußes des Benutzers von dem Bremselement bewirkt, dass das Bremselement zu der nicht bremsenden Stellung zurückkehrt, und wahlweise noch ferner in jedem Fall
wobei bei Anwendung eine Bewegung der hinteren Bremse zu der bremsenden Stellung und/oder ein Halten der hinteren Bremse bei der bremsenden Stellung bewirken, dass das wenigstens eine Bremslicht leuchtet, und wahlweise noch fernerhin in jedem Fall
wobei bei Anwendung eine Bewegung der hinteren Bremse aus der bremsenden Stellung und/oder ein Halten der hintern Bremse in der nicht bremsenden Stellung bewirken, dass das wenigstens eine Bremslicht nicht leuchtet.

3. Fahrzeug nach einem der vorhergehenden Ansprüche, wobei das wenigstens eine Bremslicht wenigstens eine LED (55, 60) umfasst und/oder
wobei das/die Bremslicht(er) von roter Farbe ist/sind und/oder
wobei das wenigstens eine Bremslicht so angebracht ist, dass es an dem Fahrzeug nach hinten zeigt.

4. Fahrzeug nach einem der vorhergehenden Ansprüche, wobei der nach hinten zeigende Abschnitt vor dem wenigstens einen Hinterrad bereitgestellt wird und/oder der nach hinten zeigende Abschnitt zwischen dem wenigstens einen Hinterrad und dem wenigstens einen Vorderrad bereitgestellt wird und/oder der nach hinten zeigende Abschnitt angrenzend an das wenigstens eine Hinterrad bereitgestellt wird und wahlweise
wobei der nach hinten zeigende Abschnitt unterhalb der Ebene einer oberen Fläche oder Fußplatte der Plattform bereitgestellt wird und/oder der nach hinten zeigende Abschnitt wenigstens einen Teil der hinteren Seite der Plattform umfasst.

5. Fahrzeug nach einem der vorhergehenden Ansprüche, wobei das wenigstens eine Bremslicht wenigstens ein Beleuchtungsmittel auf einem linksseitigen hinteren Abschnitt des Fahrzeugs/des Rollers/der Plattform und wenigstens ein Beleuchtungsmittel auf einem rechtsseitigen hinteren Abschnitt des Fahrzeugs/des Rollers/der Plattform umfasst.

6. Fahrzeug nach Anspruch 5, wobei der links- und der rechtsseitige hintere Abschnitt auf jeder Seite eines /des Hinterrads oder an dieselbe angrenzend bereitgestellt werden.

7. Fahrzeug nach Anspruch 2 oder einem der Ansprüche 3 bis 6, soweit abhängig von Anspruch 2, wobei das Fahrzeug elektronische Mittel (75) umfasst, die durch eine Bewegung des Bremselements aktiviert werden.

8. Fahrzeug nach Anspruch 7, wobei die elektronischen Mittel ein Schaltmittel (80) umfassen, das ein Schaltelement (85) hat, das in einen Kontakt mit dem Bremselement vorgespannt wird, und wahlweise
wobei bei Anwendung, wenn sich das Bremselement in der nicht bremsenden Stellung befindet, sich das Schaltelement in einer ersten oder eingezogenen Stellung befindet und sich das Schaltmittel in einem "Aus"-Zustand befindet, während, wenn sich das Bremselement in der bremsenden Stellung befindet, sich das Schaltelement in einer zweiten oder ausgefahrenen Stellung befindet und sich das Schaltmittel in einem "Ein"-Zustand befindet.

9. Fahrzeug nach einem der Ansprüche 7 oder 8, wobei die elektronischen Mittel Schaltkreismittel umfassen, die wahlweise eine oder mehrere Batterien und das wenigstens eine Bremslicht einschließen, und wahlweise
wobei die Batterie(n) in einem Fach (90) unter der Plattform des Rollers, wie beispielsweise innerhalb eines länglichen Schlitzes in derselben, bereitgestellt wird/werden.

10. Fahrzeug nach einem der Ansprüche 7 bis 9, wobei die elektronischen Mittel/das Fach einen Ein-/Aus-Schalter für die elektronischen Mittel einschließen.

11. Fahrzeug nach einem der vorhergehenden Ansprüche, wobei das wenigstens eine Bremslicht vor einem hintersten Abschnitt des Hinterrads/der Hinterräder bereitgestellt wird und/oder das wenigstens eine Bremslicht vor einem vordersten Abschnitt des Hinterrads/der Hinterräder bereitgestellt wird.

12. Fahrzeug nach einem der vorhergehenden Ansprüche, wobei das Fahrzeug ein Vorderrad und ein Hinterrad umfasst.

## Revendications

1. Véhicule automoteur ou à propulsion par le pied (5), le véhicule étant une trottinette (10), par exemple une trottinette pliable ou une micro-trottinette, le véhicule comprenant au moins un feu de freinage ou un moyen d'éclairage (11), au moins une roue avant (15) et au moins une roue arrière (20), ainsi qu'une plaque repose-pied ou une plate-forme (70), agencée entre la au moins une roue avant et la au moins une roue arrière ;
**caractérisé en ce que** le au moins un feu de freinage est agencé sur une partie orientée vers l'arrière (65) de la plate-forme du véhicule, la partie orientée vers l'arrière comprenant une surface orientée vers l'arrière de la plate-fonne.

2. Véhicule automoteur selon la revendication 1, dans lequel la trottinette comporte un élément de frein (35), par exemple un élément de frein arrière (55), et optionnellement
dans lequel l'élément de frein est poussé par un moyen poussoir vers une position de non freinage ; et/ou
l'élément de frein comprend un passage de roue ou un moyen de protection, et optionnellement en outre dans ladite option
dans lequel il existe dans une position ou un état de non freinage un espace entre l'élément et la au moins une roue arrière du véhicule/de la trottinette, tandis que dans une position ou dans un état de freinage, l'élément de frein contact par frottement la au moins une roue arrière, et optionnellement en outre, dans chaque cas
dans lequel l'élément de frein peut en service être enfoncé dans une position de freinage par un utilisateur appliquant son pied sur l'élément de frein, le retrait du pied de l'utilisateur de l'élément de frein entraînant le retour de l'élément de frein dans la position de non freinage, et optionnellement en outre, dans chaque cas
dans lequel le déplacement en service du frein arrière vers la position de freinage et/ou le maintien du frein arrière au niveau de la position de freinage entraîne l'éclairage du au moins un feu de freinage, et optionnellement en outre, dans laque cas
dans lequel le déplacement en service du frein arrière à partir de la position de freinage et/ou le maintien du frein arrière au niveau de la position de non freinage n'entraîne pas d'éclairage du au moins un feu de freinage.

3. Véhicule selon l'une quelconque des revendications précédentes, dans lequel le au moins un feu de freinage comprend au moins une DEL (55, 60), et/ou
le(s) feu(x) de freinage est (sont) de couleur rouge, et/ou
le au moins un feu de freinage est monté de sorte à être orienté vers l'arrière sur le véhicule.

4. Véhicule selon l'une quelconque des revendications précédentes, dans lequel la partie orientée vers l'arrière est agencée vers l'avant de la au moins une roue arrière, et/ou la partie orientée vers l'arrière est agencée entre la au moins une roue arrière et la au moins une roue avant, et/ou la partie orientée vers l'arrière est agencée près de la au moins une roue arrière, et optionnellement
dans lequel la partie orientée vers l'arrière est agencée au-dessus d'un niveau d'une surface supérieure ou d'une plaque repose-pied de la plate-forme, et/ou la partie orientée vers l'arrière comprend au moins une partie d'un côté arrière de la plate-forme.

5. Véhicule selon l'une quelconque des revendications précédentes, dans lequel le au moins un feu de freinage comprend au moins un moyen d'éclairage sur une partie arrière de gauche de la plate-forme du véhicule/de la trottinette, et au moins un moyen d'éclairage sur une partie arrière de droite de la plate-forme du véhicule/de la trottinette.

6. Véhicule selon la revendication 5, dans lequel les parties arrière de gauche et de droite sont agencées sur chaque côté d'une/de la roue arrière ou près de celle-ci.

7. Véhicule selon la revendication 2 ou selon l'une quelconque des revendications 3 à 6, dépendant de la revendication 2, dans lequel le véhicule comprend un moyen électronique (75) actionné par le déplacement de l'élément de frein.

8. Véhicule selon la revendication 7, dans lequel le moyen électronique comprend un moyen de commutation (80), comportant un élément de commutation (85) poussé en contact avec l'élément de frein, et optionnellement
dans lequel, en service, lorsque l'élément de frein se trouve dans la position de non freinage, l'élément de commutation se trouve dans une première position ou une position rétractée, le moyen de commutation se trouvant dans un état « débranché », tandis que lorsque l'élément de frein se trouve dans la position de freinage, l'élément de commutation se trouve dans une deuxième position ou position étendue, le moyen de commutation se trouvant dans un état « branché ».

9. Véhicule selon les revendications 7 ou 8, dans lequel le moyen électronique comprend un moyen de circuit, englobant optionnellement une ou plusieurs batteries, et le au moins un feu de freinage, et optionnellement,
dans lequel la (les) batterie(s) est/sont agencée(s) dans un compartiment (90) au-dessous de la plate-forme de la trottinette, par exemple dans une fente allongée formée dans celle-ci.

10. Véhicule selon l'une quelconque des revendications 7 à 9, dans lequel le moyen électronique/le compartiment englobent un commutateur en/hors pour le moyen électronique.

11. Véhicule selon l'une quelconque des revendications précédentes, dans lequel le au moins un feu de freinage est agencé vers l'avant de la partie arrière extrême de la (des) roue(s) arrière, et/ou le au moins un feu de freinage est agencé vers l'avant de la partie avant extrême de la (des) roue(s) arrière.

12. Véhicule selon l'une quelconque des revendications précédentes, dans lequel le véhicule comprend une roue avant et une roue arrière.
